# FASCICULE DE BREVET EUROPEEN

(11) **EP 1 457 648 B1**
(45) Date de publication et mention de la délivrance du brevet: **01.02.2006**
(21) Numéro de dépôt: 04290578.6
(22) Date de dépôt: 03.03.2004
(51) Int. Cl.: F01N 7/08, F01N 3/05, F01D 25/30, F02K 1/82, F01D 5/00

(54) **Dispositif de dilution des gaz d'échappement**
Vorrichtung zur Verdünnung von Abgasen
Exhaust gas dilution device

(30) Priorité: 13.03.2003 FR 0303124
(43) Date de publication de la demande: 15.09.2004
(73) Titulaire: GIAT Industries, 78000 Versailles (FR)
(72) Inventeur: Brun, Michel, 28130 Maintenon (FR); Carlier, Sylvain, 78280 Guyancourt (FR); Pizon, Benoit, 91190 Villiers le Bacle (FR)
(74) Mandataire: Célanie, Christian

(56) Documents cités:
- US-A- 2 112 534
- US-A- 5 709 529

## Description

Le secteur technique de la présente invention est celui des dispositifs destinés à réduire les signatures visible et infrarouge des véhicules militaires, au niveau de leur gaz d'échappement.

L'évolution de la technologie des caméras et capteurs thermiques permet de détecter à de très grandes distances des sources chaudes dans l'environnement terrestre, tels des gaz d'échappement et de refroidissement du moteur d'un véhicule. Pour améliorer la furtivité face à l'évolution des capteurs infrarouges, il devient donc nécessaire de réduire le niveau d'énergie rayonnée par les flux d'échappement et de refroidissement des véhicules militaires.

Il existe déjà des publications proposant un dispositif de dilution uniforme des gaz d'échappement d'un véhicule militaire. C'est le cas du brevet FR-2 776 705 qui décrit un dispositif où l'air est refroidi dans une aire de refroidissement puis rejeté vers l'extérieur par une sortie munie de persiennes. Ces dispositifs présentent cependant un inconvénient majeur. En effet, bien que la température des gaz éjectés soit largement diminuée, ces gaz demeurent repérables en raison de la forme de leur flux de sortie dont la trace est visible sous forme de panache par des équipements à vision infrarouges.

Une solution pour dissiper rapidement ce panache consiste à appliquer à la sortie du tube d'échappement des gaz du véhicule un disperseur de jet dont les pales dispersent radialement le flux gazeux. Cependant, un inconvénient majeur de ce type de solution demeure dans le fait qu'un tel disperseur de jet constitue un obstacle au flux gazeux et diminue de ce fait les performances du véhicule (en particulier lors des phases d'accélération du véhicule).

Le brevet US 2 112534 décrit un dispositif d'évacuation des gaz de combustion d'un moteur de locomotive. Ce dispositif comporte notamment une turbine de ventilation, composée d'un moteur électrique et de pales actionnées par le moteur électrique et reliées entre-elles par un moyeu, de forme semi-ovoïdale. La turbine permet de générer une circulation forcée d'air de l'intérieur de l'enceinte vers l'extérieur de cette enceinte.

Un tel dispositif a pour inconvénient de générer une circulation forcée, ce qui va à l'encontre de l'objectif de l'invention qui vise à résoudre le problème technique de la dissipation et de la dilution rapide des gaz d'échappement. De plus les pales mises en oeuvre dans ce document doivent être d'une forme adéquate à l'entraînement d'air, forme qui engendre obligatoirement des pertes de charges.

Le but de la présente invention est de fournir un dispositif permettant de dissiper et diluer rapidement les gaz en scindant et en déviant le flot du panache gazeux initial, sans pour autant lui opposer d'obstacle notable, pour l'aider à se dissiper dans l'air environnant.

L'invention a donc pour objet un dispositif de dilution et de dispersion des gaz d'échappement et/ou de l'air de refroidissement du moteur d'un véhicule, comportant des pales et un moyeu, caractérisé en ce que le moyeu du dispositif comporte un moyen destiné à réduire des pertes de charges du flux gazeux.

Selon une autre caractéristique de l'invention, le moyen de réduction de pertes de charges est constitué par au moins une ouverture dans le moyeu.

Selon encore une autre caractéristique, le nombre d'ouvertures, leur diamètre et leur disposition sont déterminés en fonction de la perméabilité que l'on souhaite conférer au dispositif.

Selon une autre caractéristique, le moyen de réduction de pertes de charges est constitué par un élément profilé permettant d'infléchir le flux gazeux en direction des pales.

Selon une autre caractéristique, les pales sont fixées sur un anneau.

Selon une autre caractéristique, l'anneau est libre en rotation par rapport au moyeu.

Selon une autre caractéristique, l'anneau est solidaire du moyeu.

Un tout premier avantage du dispositif selon l'invention réside dans sa facilité de montage sur un véhicule, sans nécessiter d'adaptation des éléments équipant déjà le véhicule.

Un autre avantage réside dans la facilité de mise en oeuvre du dispositif et dans son coût relativement limité.

Un autre avantage réside dans le fait que ce dispositif influe relativement peu sur les performances du véhicule qu'il équipe.

D'autres caractéristiques, détails et avantages de l'invention ressortiront plus clairement de la description donnée ci-après à titre indicatif en relation avec des dessins dans lesquels :
- la figure 1a représente en vue de face un premier exemple de réalisation d'un dispositif selon l'invention,
- la figure 1b est une vue de trois-quarts des pales du dispositif selon le même exemple de réalisation,
- la figure 2 représente en vue de trois-quarts un second exemple de réalisation d'un dispositif selon l'invention,
- la figure 3a est une modélisation d'un flux de gaz de refroidissement d'un véhicule non-équipé du dispositif selon l'invention, et
- la figure 3b est une modélisation d'un flux de gaz de refroidissement d'un véhicule équipe du dispositif selon l'invention.

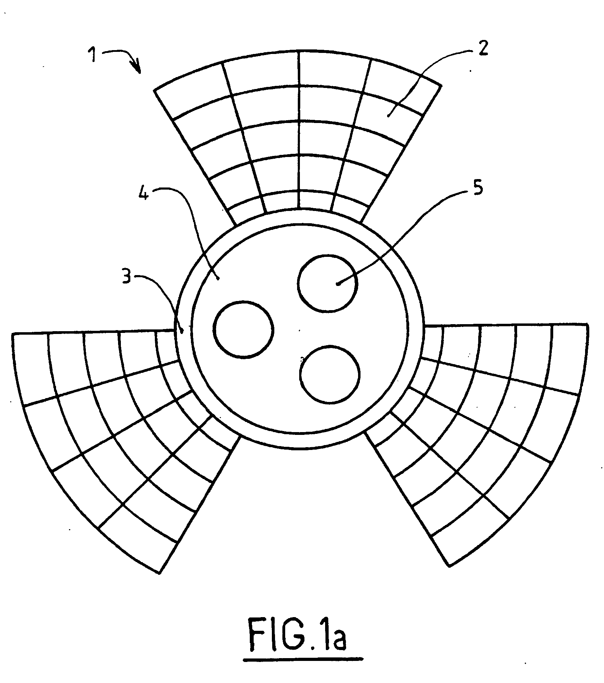

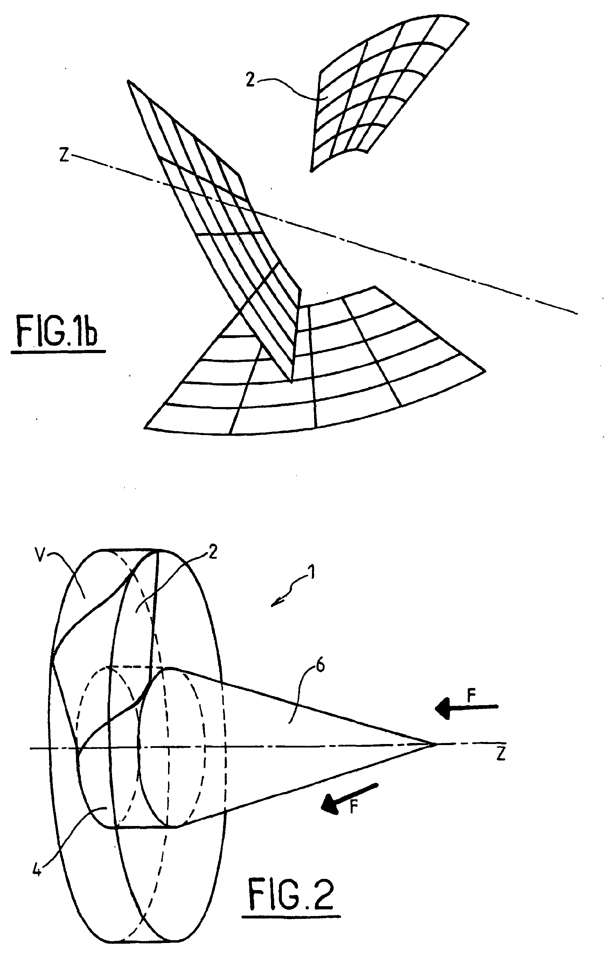

La figure 1a est une vue de face qui représente un premier exemple de réalisation d'un dispositif de dilution et de dispersion des gaz d'échappement 1, également appelé disperseur de jet, selon l'invention, destiné à être monté à la sortie d'un tube d'échappement (non représenté) des gaz du moteur d'un véhicule, par exemple un véhicule militaire. La figure 1b représente les pales du même disperseur de jet en vue de trois-quarts. Bien entendu, ce dispositif peut être monté sans modification sensible dans le conduit d'évacuation de l'air de refroidissement du moteur ou de tout autre élément chaud du véhicule.

Le disperseur de jet 1 est composé de pales 2, d'un anneau 3, et d'un moyeu 4. Les pales 2 sont solidaires de l'anneau 3 qui, dans cet exemple de réalisation, est libre en rotation par rapport au moyeu 4. L'inclinaison des pales 2 par rapport à leur axe Z de rotation est comprise entre 20° et 75°. Cet angle est un angle constant, dans le cas de pales planes. Dans le cas de pales vrillées, l'inclinaison varie progressivement au fil du rayon. Ces pales 2 ne couvrent pas la totalité de la circonférence de l'anneau 3, entre ces pales des secteurs libres de tout obstacle permettent une circulation minimale du flux.

Le moyeu 4 est muni d'ouvertures circulaires 5. Le nombre d'ouvertures et leur diamètre sont déterminés en fonction de la perméabilité que l'on souhaite conférer au dispositif.

Ce mode de réalisation permet de combiner un flux sensiblement unidirectionnel et un flux dispersé radialement. Le flux unidirectionnel est lié aux ouvertures 5 et le flux dispersé est lié aux pales 2. La dispersion du flux gazeux par les pales est fonction de l'angle de celles-ci. Un angle élevé produit peu de contre-pression dans le conduit d'échappement, mais une dilution relativement limitée, tandis qu'un angle faible induit une excellente dilution mais avec une contre-pression plus marquée, donc plus de pertes de charges. Le nombre d'ouvertures et leur diamètre permettent d'autoriser un flux unidirectionnel plus ou moins important. En effet, s'il n'y a aucune ouverture, le flux unidirectionnel est nul. Les pertes de charges sont alors élevées mais la dilution du flux est meilleure. Par contre, un nombre important d'ouvertures et/ou des ouvertures d'un diamètre important engendrent un flux unidirectionnel important, ce qui diminue les pertes de charges mais atténue la dilution des gaz.

Le nombre d'ouvertures, leur disposition et leur diamètre seront donc calculés afin d'adapter la dilution des gaz d'échappement en fonction de la furtivité recherchée et du rendement que l'on souhaite obtenir du véhicule.

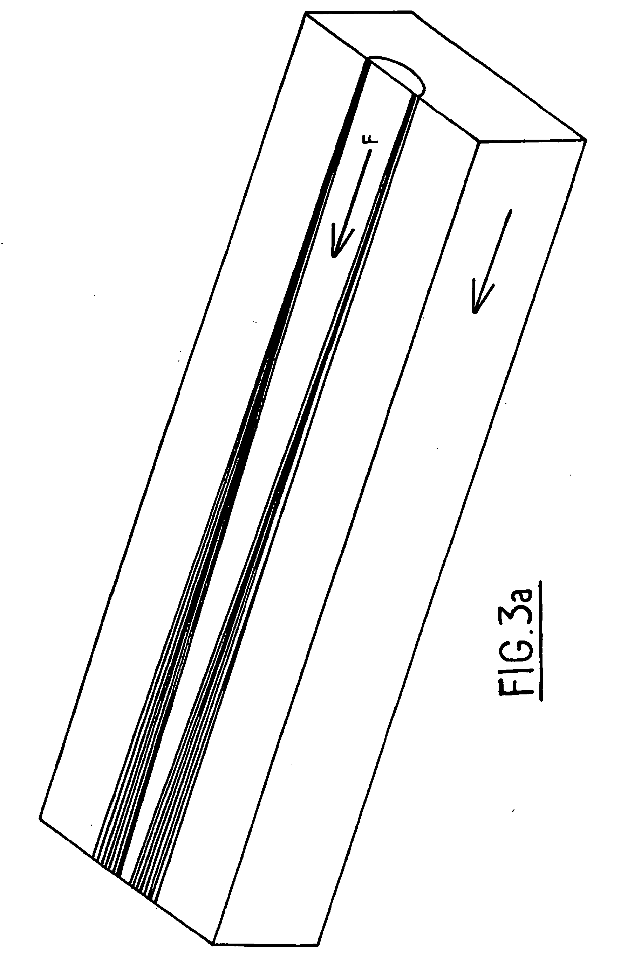

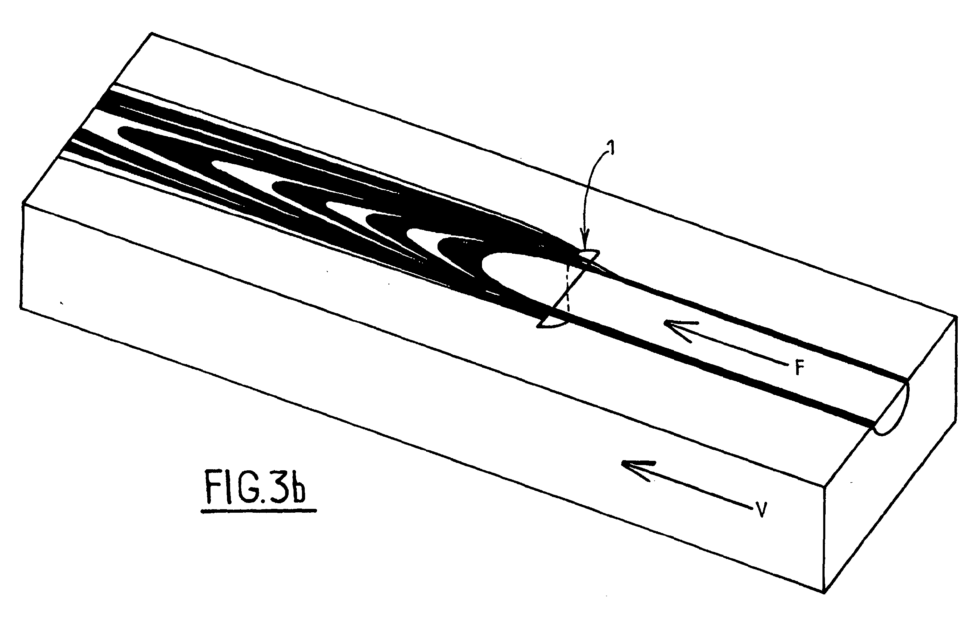

La figure 2 est une vue de trois-quarts représentant un second exemple de réalisation d'un disperseur de jet selon l'invention.

Dans cet exemple de réalisation, le moyeu central 4 ne comporte aucune ouverture mais est muni d'un élément profilé 6 conique destiné à orienter le flux gazeux vers les pales 2. Les pales 2 sont soit fixées sur le moyeu central 4, soit libres en rotation autour de l'axe Z et décrivent un volume V. La base du cône est reliée au moyeu de façon connue, la pointe étant dirigée vers l'amont du flux.

Dans ce mode de réalisation, on cherche à dévier le flux F des gaz, initialement parallèle à l'axe Z, vers les pales 2 en minimisant les pertes de charges. La forme de l'élément profilé 6 sera donc définie en fonction des caractéristiques du flux, des pales 2 et des résultats recherchés.

Les figures 3a et 3b représentent des modélisations d'un flux de gaz de refroidissement d'un véhicule. Ces figures illustrent la contribution apportée par l'invention telle que revendiquée à l'état de la technique. La figure 3a modélise un flux gazeux F issu d'un circuit de refroidissement d'un véhicule non muni du dispositif de dilution selon l'invention. Dans ce cas, le flux d'échappement est sensiblement tubulaire et la température centrale du flux reste élevée.

La figure 3b modélise le flux gazeux issu du même circuit de refroidissement mais muni du dispositif de dilution selon l'invention. Dans ce cas, les conditions de dilutions ont été modélisées pour être les plus défavorables (la température des gaz est de 160 °C et la température de l'air de 30 °C, le flux gazeux F et le vent V sont orientés dans le même sens). L'alternance de bandes sombres et de bandes claires correspond à des gradients de 10 °C. La figure 3b montre que l'invention permet de réduire rapidement la température du flux, aussi bien dans sa périphérie qu'en son centre.

Ces réalisations de l'invention ont été données à titre d'exemple. D'autres réalisations sont possibles. On pourra notamment remplacer l'élément profilé conique de la figure 2 par un élément profilé hémisphérique, spiralo-conique, hyperbolique, parabolique ou semi-elliptique, ou tout autre type de profil dont la forme permet d'infléchir le flux gazeux en direction des pales.

Pour tous les modes de réalisations, on déterminera le nombre de pales et leur inclinaison selon l'orientation que l'on souhaite donner au flux gazeux.

## Revendications

1. Dispositif de dilution et de dispersion des gaz d'échappement et/ou de l'air de refroidissement du moteur d'un véhicule, comportant des pales (2) et un moyeu (4), **caractérisé en ce que** le moyeu (4) comporte un moyen (5, 6) de réduction des pertes de charges du flux gazeux.

2. Dispositif de dilution et de dispersion des gaz d'échappement et/ou de l'air de refroidissement selon la revendication 1, **caractérisé en ce que** le moyen (5) de réduction de pertes de charges est constitué par une ou plusieurs ouvertures (5) dans le moyeu (4).

3. Dispositif de dilution et de dispersion des gaz d'échappement et/ou de l'air de refroidissement selon la revendication 2, le nombre d'ouvertures (5), leur diamètre et leur disposition sont déterminés en fonction de la perméabilité que l'on souhaite conférer au dispositif.

4. Dispositif de dilution et de dispersion des gaz d'échappement et/ou de l'air de refroidissement selon la revendication 1, **caractérisé en ce que** le moyen (6) de réduction de pertes de charges est constitué par un élément profilé (6) permettant d'infléchir le flux gazeux en direction des pales (2).

5. Dispositif de dilution et de dispersion des gaz d'échappement et/ou de l'air de refroidissement selon l'une quelconque des revendications de l'air prédentes, **caractérisé en ce que** les pales (2) sont fixées sur un anneau (3).

6. Dispositif de dilution et de dispersion des gaz d'échappement et/ou de l'air de refroidissement selon la revendication 5, **caractérisé en ce que** l'anneau (3) est libre en rotation par rapport au moyeu (4).

7. Dispositif de dilution et de dispersion des gaz d'échappement et/ou de l'air de refroidissement selon la revendication 5, **caractérisé en ce que** l'anneau (3) est solidaire du moyeu (4).

## Patentansprüche

1. Vorrichtung zum Auflösen und Ableiten von Abgasen und/oder von Kühlluft des Motors eines Fahrzeuges, umfassend Blätter (2) und eine Nabe (4), **dadurch gekennzeichnet, dass** die Nabe (4) ein Mittel (5, 6) zur Reduzierung von den Druckverlusten des Gasstromes umfasst.

2. Vorrichtung zum Auflösen und Ableiten von Abgasen und/oder von Kühlluft nach Anspruch 1, **dadurch gekennzeichnet, dass** das Mittel (5) zur Reduzierung von Druckverlusten von einer oder mehreren Öffnungen (5) in der Nabe (4) gebildet wird.

3. Vorrichtung zum Auflösen und Ableiten von Abgasen und/oder von Kühlluft nach Anspruch 2, **dadurch gekennzeichnet, dass** die Anzahl der Öffnungen (5), ihr Durchmesser und ihre Anordnung in Abhängigkeit von der Durchlässigkeit bestimmt werden, die der Vorrichtung verliehen werden soll.

4. Vorrichtung zum Auflösen und Ableiten von Abgasen und/oder von Kühlluft nach Anspruch 1, **dadurch gekennzeichnet, dass** das Mittel (6) zur Reduzierung von Druckverlusten von einem profilierten Element (6) gebildet wird, das es ermöglicht, den Gasstrom in Richtung der Blätter (2) umzulenken.

5. Vorrichtung zum Auflösen und Ableiten von Abgasen und/oder von Kühlluft nach irgendeinem der vorhergehenden Ansprüche, **dadurch gekennzeichnet, dass** die Blätter (2) an einem Ring (3) befestigt sind.

6. Vorrichtung zum Auflösen und Ableiten von Abgasen und/oder von Kühlluft nach Anspruch 5, **dadurch gekennzeichnet, dass** der Ring (3) in Bezug auf die Nabe (4) in Drehrichtung frei ist.

7. Vorrichtung zum Auflösen und Ableiten von Abgasen und/oder von Kühlluft nach Anspruch 5, **dadurch gekennzeichnet, dass** der Ring (3) fest mit der Nabe (4) verbunden ist.

## Claims

1. A dilution and dispersion device for the exhaust gases and/or cooling air of a vehicle's engine, that incorporates blades (2) and a hub (4), **characterised in that** the hub (4) of the device incorporates means (5, 6) intended to reduce the loss in the gaseous flow rate generated by the gases.

2. A dilution and dispersion device for exhaust gases and/or cooling air of the engine according to Claim 1, **characterised in that** the flow rate loss reduction means (5) are constituted by one or several openings in the hub (4).

3. A dilution and dispersion device for exhaust gases and/or cooling air of the engine according to Claim 2, **characterised in that** the number of openings (5), their diameter and their arrangement are determined according to the permeability which the device is to be given.

4. A dilution and dispersion device for exhaust gases and/or cooling air of the engine according to Claim 1, **characterised in that** the flow rate loss reduction means (6) are constituted by a profiled element (6) allowing the gases to be defected towards the blades (2).

5. A dilution and dispersion device for exhaust gases and/or cooling air of the engine according to any one of the above Claims, **characterised in that** these blades (2) are fastened to a ring (3).

6. A dilution and dispersion device for exhaust gases and/or cooling air of the engine according to Claim 5, **characterised in that** the ring (3) is free to rotate with respect to the hub (4).

7. A dilution and dispersion device for exhaust gases and/or cooling air of the engine according to Claim 5, **characterised in that** the ring (3) is integral with the hub (4).
